# EUROPEAN PATENT APPLICATION

(11) **EP 4 714 246 A1**
(43) Date of publication of application: **25.03.2026**
(21) Application number: 25201146.5
(22) Date of filing: 09.09.2025
(51) Int. Cl.: A01D 41/12, A01F 12/40, A01F 12/56

(54) **RESIDUE MANAGEMENT SYSTEM FOR COMBINE HARVESTER**

(30) Priority: 20.09.2024 US 202463696900 P
(71) Applicant: CNH Industrial America LLC, New Holland, PA 17557 (US)
(72) Inventor: Harmon, Zachary, New Holland, 17557 (US); Isaac, Nathan E., New Holland, 17557 (US)
(74) Representative: CNH Industrial IP Department

(57) **Abstract**

An agricultural vehicle includes a threshing system that is configured to output straw material in a straw feed stream at a first location of the vehicle; a cleaning system that is configured to output a chaff feed stream at a second location of the vehicle that is different from the first location; and a residue handling system. The residue handling system includes (i) a chaff receptacle positioned and configured to receive weed seeds from both the straw feed stream and the chaff feed stream, and (ii) a weed seed mill that is configured to receive the weeds seeds from the chaff receptacle and devitalize those weeds seeds.

## Description

### FIELD OF THE INVENTION

The present invention relates to agricultural harvesters. More specifically, the present invention relates to a residue management system including a mill (e.g., chaff mill or weed seed mill) for devitalizing weed seeds.

### BACKGROUND OF THE INVENTION

As is described in U.S. Patent No. 10,314,232 to CNH America LLC (the '232 Patent), an agricultural harvester known as a "combine" is historically termed such because it combines multiple harvesting functions with a single harvesting unit, such as picking, threshing, separating and cleaning. The separating system of the combine directs the non-grain material to a residue system. The residue system distributes the non-grain material through a chopper, a spreader, and/or a windrow chute before it is distributed onto the field.

Crop residue that is discharged onto fields often contains lost grain and seeds, including shrunken crop seeds and weed seeds. Many of the seeds are not destroyed and remain viable after exiting the combine. Viable seeds can germinate and sprout in the field, resulting in the spread of undesired weeds and potential crop disease. Weeds that sprout are typically killed by tillage or chemical treatment, however, weed control measures such as these are costly. Moreover, these weed control measures require additional equipment passing over the field, which can increase soil compaction and adversely impact the condition of the field.

The '232 Patent discloses a weed seed mill positioned for destroying the weed seeds through shearing or impact forces. A weed seed mill may also be referred to herein or in the art as a seed processor, chaff mill, chaff mill assembly, or chaff processor. The seed mill is configured to receive crop residue from a cleaning system of the combine and destroy or damage seeds through a combination of shearing and impact forces, so that when the seeds exit the combine, the seeds are no longer viable and able to germinate.

The typical weed seed mill receives only the chaff exiting from cleaning system. However, it has been found that weed seeds may also be present in the straw, stalks or other larger material in the straw flow exiting the threshing system.

In view of the foregoing, described herein is a residue management system that is configured to (i) extract the weed seeds from both the chaff flow and the straw flow and (ii) process the weed seeds from both flows, while minimizing power consumption associated with processing the straw flow.

### SUMMARY OF THE INVENTION

According to one aspect of the invention, an agricultural vehicle comprises a threshing system that is configured to output straw material in a straw feed stream into a strawhood, and a cleaning system that is configured to output a chaff feed stream into the strawhood, the chaff feed stream being separate from the straw feed stream. The vehicle further comprises a residue handling system including (i) a chaff receptacle positioned and configured to receive weed seeds from both the straw feed stream and the chaff feed stream, and (ii) a weed seed mill that is configured to receive the weeds seeds from the chaff receptacle and devitalize those weeds seeds.

According to another aspect of the invention, a residue handling system is configured to process weed seeds contained in a straw feed stream and a separate chaff feed stream produced by an agricultural vehicle. The residue handling system comprises a rotatable drum and a chaff receptacle having a perforated surface. The perforated surface includes openings sized to permit the passage of weed seeds and chaff therethrough. The chaff receptacle is positioned adjacent the rotatable drum. The rotatable drum is positioned to thresh the straw and chaff feed streams against the perforated surface in order to separate the weed seeds from the straw and chaff feed streams. The residue handling system also comprises a weed seed mill that is configured to receive the weeds seeds from the chaff receptacle and devitalize those weeds seeds.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
FIG. 1 is a schematic side view of an embodiment of an agricultural harvester in the form of a combine illustrating the residue handling system of the present invention in a cutout view toward the rear of the harvester.
FIG. 2 depicts a schematic side elevation view of a residue handling system for the combine of FIIG. 1 according to a first example of the invention.
FIG. 3 depicts a schematic side elevation view of another residue handling system according to a second example of the invention.
FIG. 4A depicts a schematic side elevation view of another residue handling system according to a third example of the invention.
FIG. 4B depicts a schematic top view of the residue handling system of FIG. 4A.
FIG. 5 depicts a schematic side elevation view of another residue handling system according to a fourth example of the invention.
FIG. 6 depicts a schematic side elevation view of another residue handling system according to a fifth example of the invention.

It is noted that the figures depict the elements in schematic form and are not necessarily to scale.

### DETAILED DESCRIPTION OF THE INVENTION

Corresponding reference characters indicate corresponding parts throughout the several views. The exemplification set out herein illustrates an embodiment of the invention, in one form, and such exemplification is not to be construed as limiting the scope of the invention in any manner.

Inasmuch as various components and features of harvesters are of well-known design, construction, and operation to those skilled in the art, the details of such components and their operations will not generally be discussed in significant detail unless considered of pertinence to the present invention or desirable for purposes of better understanding.

In the drawings, like numerals refer to like items, certain elements and features may be labeled or marked on a representative basis without each like element or feature necessarily being individually shown, labeled, or marked, and certain elements are labeled and marked in only some, but not all, of the drawing figures.

The terms "grain", "chaff", "straw", and "tailings" are used principally throughout this specification for convenience, but it is to be understood that these terms are not intended to be limiting. Thus "grain" refers to that part of the crop material that is threshed and separated from the discardable part of the crop material, which is referred to as chaff and includes straw, seeds, and other non-grain crop material.

Also, the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting. The terms "upstream" and "downstream" are determined with reference to the flow of crop through the combine.

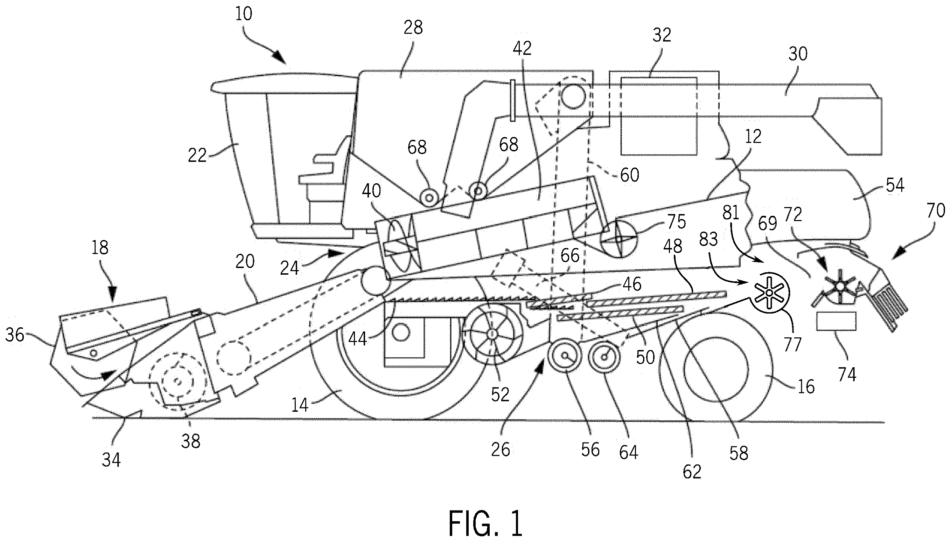

Referring now to the drawings, and more particularly to FIG. 1, there is shown an agricultural harvester in the form of a combine 10, which generally includes a chassis 12, ground engaging wheels 14 and 16, a header 18, a feeder housing 20, an operator cab 22, a threshing and separating system 24, a cleaning system 26, a grain tank 28, and an unloading conveyance 30. Motive force is selectively applied to the front wheels 14 through a power plant in the form of an engine 32 and a transmission (not shown).

The header 18 is mounted to the front of the combine 10 and includes a cutter bar 34 for severing crops from a field during forward motion of combine 10. A rotatable reel 36 feeds the crop into the header 18, and a double auger 38 feeds the severed crop laterally inwardly from each side toward the feeder housing 20. The feeder housing 20 conveys the cut crop to threshing and the separating system 24.

The threshing and separating system 24 generally includes a rotor 40 at least partially enclosed by and rotatable within a corresponding perforated concave 42. The cut crops are threshed and separated by the rotation of the rotor 40 within the concave 42, and larger elements, such as stalks, leaves and the like are discharged from the rear of the combine 10. Smaller elements of crop material including grain and non-grain crop material, including particles lighter than grain, such as chaff, seeds, dust and straw, are discharged through perforations of the concave 42.

Grain that has been separated by the threshing and separating assembly 24 falls onto a grain pan 44 and is conveyed toward the cleaning system 26. The cleaning system 26 may include an optional pre-cleaning sieve 46, an upper sieve 48 (also known as a chaffer sieve), a lower sieve 50 (also known as a cleaning sieve), and a cleaning fan 52. Grain on the sieves 46, 48 and 50 is subjected to a cleaning action by the fan 52, which provides an airflow through the sieves, to remove chaff and other impurities such as dust from the grain by making this material airborne for discharge from the straw hood 54 of the combine 10. The grain pan 44 and the pre-cleaning sieve 46 oscillate in a fore-to-aft manner to transport the grain and finer non-grain crop material to the upper surface of the upper sieve 48. The upper sieve 48 and the lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and in front of the lower sieve 50. The clean grain auger 56 receives clean grain from each sieve 48, 50 and from bottom pan 58 of the cleaning system 26. The clean grain auger 56 conveys the clean grain laterally to a generally vertically arranged grain elevator 60 for transport to the grain tank 28. Tailings from the cleaning system 26 fall to a tailings auger trough 62. The tailings are transported via tailings auger 64 and the return auger 66 to the upstream end of the cleaning system 26 for repeated cleaning action. The cross augers 68 at the bottom of the grain tank 28 convey the clean grain within the grain tank 28 to the unloading auger 30 for discharge from the combine 10.

Although a rotary combine has been described thus far, it should be understood that the details presented herein are not limited to a rotary combine and may be applicable to other machines, such as conventional combines and cross (or hybrid) combines.

A residue handling system 70 is integrated in the rear of harvester 10. Residue handling system 70 generally comprises a straw hood 54, a discharge beater 75, one or more seed mills 77, a chopper 72, and one or more spreaders 74.

Referring now to the individual components of residue handling system 70, straw hood 54 defines an interior space in the form of a passageway 69 for straw and chaff. Discharge beater 75 is configured to deliver a stream of straw material into the upper end of passageway 69 towards chopper 72. Chopper 72 is configured to rotate and chop the straw material and deliver it to spreader 74. The spreader 74 discharges the non-grain crop material across the harvested width behind harvester 10. Further details of discharge beater 75, chopper 72 and spreader 74 are provided in the '232 Patent. It is noted that chopper 72 may be omitted, if so desired. For example, if beater 75 has two speed settings (e.g., high and low), there may not be a need to include a separate chopper 72 because the beater 75 can act as a chopper when it is operated at the high-speed setting.

At the same time that beater 75 delivers a first stream 81 of straw material to chopper 72 along the upper end of passageway 69, the cleaning system 26 delivers a second stream 83 of chaff material along the lower end of passageway 69 (by way of reciprocating sieve 48 and cleaning fan 52) and into seed mill 77. Streams 81 and 83 may include weed seeds. Seed mill 77 includes a rotor and a stator that are together configured to devitalize weed seeds to prevent germination of those seeds when they are distributed back onto the field. Seed mill 77 ultimately expels the processed chaff either directly onto the field or into the spreader 74 which, in turn, expels the chaff onto the field. Further details in connection with seed mill 77 are described in U.S. Patent No. 10,004,176 and U.S. Patent App. Pub. Nos. 20230086794 and 20220062914.

It is noted that if seed mill 77 does not receive any material from the first stream 81, then the seed mill 77 is unable to devitalize any seeds contained within the first stream 81. Described hereinafter are multiple examples whereby the residue handling system is configured to collect weed seeds from both streams 81 and 83 and devitalize those seeds using a seed mill.

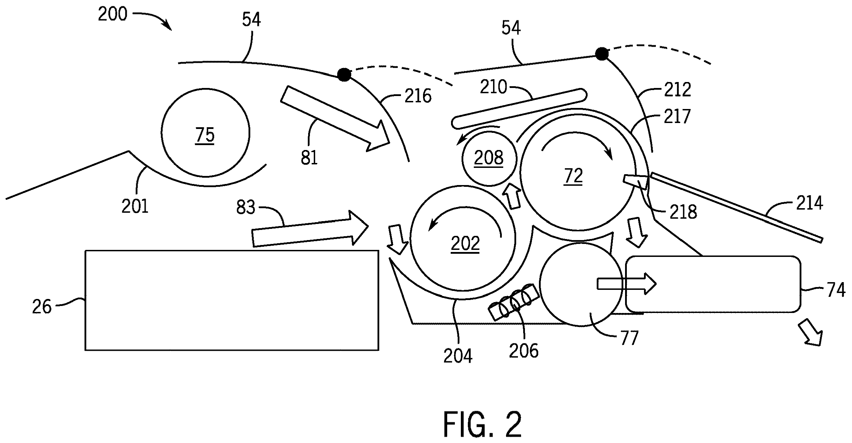

Turning now to FIG. 2, that figure depicts a schematic view of a residue handling system according to a first example of the invention. The details of the residue handling system 70 of FIG. 1 apply to the residue handling system 200 of FIG. 2 unless stated otherwise. The residue handling system 200 may form part of the combine of FIG. 1 replacing the residue handling system 70. Like residue handling system 70, residue handling system 200 generally comprises straw hood 54, discharge beater 75, one or more seed mills 77, chopper 72, and one or more spreaders 74.

Residue handling system 200 additionally includes a threshing drum 202, a perforated pan 204 positioned beneath threshing drum 202, a conveyor 206 for transporting chaff to seed mill 77, a roller 208 for removing crop material from the surface of drum 202, and a conveyor 210 for transporting straw material toward the swath chute 214 disposed on straw hood 54. It should be understood at the outset that residue handling system 200 is not limited to the aforementioned components, as one or more of those components may be either omitted or replaced with a substitute component.

Turning now to the individual components of residue handling system 200, straw hood 54 includes a moveable swath door 212. The door 212 is shown in the closed position, whereas the open position of door 212 is depicted in broken lines. In the open position of the door 212, straw is permitted to pass out of the straw hood 54 and onto the swath chute 214. In the closed position of the door 212, straw is not permitted to pass out of the straw hood 54 and onto the swath chute 214. Straw hood 54 also includes a moveable bypass door 216. The door 216 is shown in the deployed position in FIG. 2, whereas the retracted position of door 216 is depicted in broken lines. In the deployed position of the door 216, straw stream 81 is guided in the direction of drum 202 for reasons described hereinafter. In the retracted position of the door 212, straw is permitted to move toward conveyor 210 and onto swath chute 214 when door 212 is in the open position.

Threshing drum 202 is a cylinder that is rotated by a belt, motor, roller, gear or other mechanism. Drum 202 may also be provided in the form of a beater, chopper or roto-processor. Drum 202 and pan 204 operate together to separate weed seeds from the crop streams 81 and/or 83. Roller 208 is positioned adjacent drum 202. Roller 208 is configured to strip material from the exterior surface of drum 202 and direct that material toward chopper 72. It is noted that drum 202 and roller 208 are rotated in the same direction.

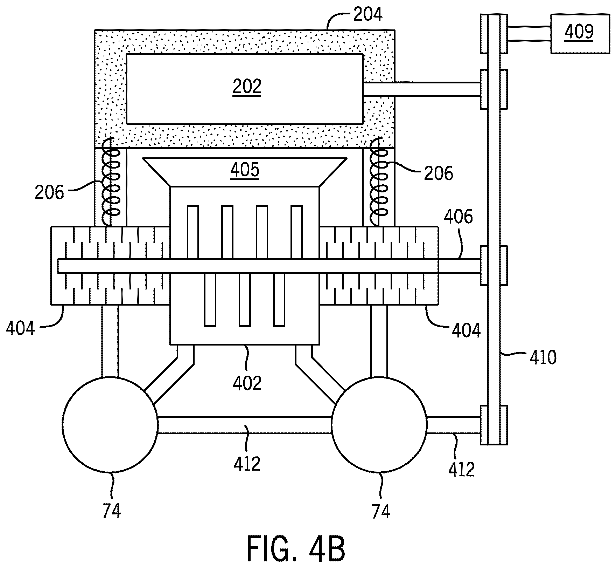

Perforated pan 204 is a receptacle having a hollow interior and a perforated top surface (perforations shown in FIG. 4B) having a concave shape disposed directly beneath drum 202. The perforated top surface of pan 204 may be a screen, for example. For that reason, the top surface of pan 204 may be more generally described as a perforated surface; and, also, the pan 204 may be more generally described as a chaff receptacle. It is also noted that a pan 201 may be positioned directly beneath beater 75. Pan 201 may be perforated, and may also be connected to an apparatus for shaking pan 201 such that chaff on pan 201 falls downward under gravity toward cleaning system 26.

Conveyor 206 is positioned at least partially within the interior region of pan 204 and is configured to deliver weed seeds, chaff and/or other crop material collected within pan 204 to the inlet of seed mill 77. Conveyor 206 may be an auger, elevator, fan or any other mechanism that is configured to transport crop material. Alternatively, the crop material may be transported under gravity from pan 204 to seed mill 77 if the seed mill 77 is positioned at an elevation beneath pan 204.

In the regular operating mode of the residue handling system 200 shown in FIG. 2, the door 212 is set to the closed position, the conveyor 210 is deactivated, and door 216 is set to the deployed position (shown in solid lines). Alternatively, in the swathing mode of the residue handling system 200, the door 212 is set to the open position (shown in broken lines), the conveyor 210 is active, and door 216 is set to the retracted position (shown in broken lines).

In the regular operating mode of the residue handling system 200 shown in FIG. 2, beater 75 conveys straw material to form the first stream 81. First stream 81 is directed toward drum 202 by the door 216. The second stream 83 of chaff generated by cleaning system 26, which is separate from the first stream 81, is also directed toward drum 202 by the reciprocating sieves and cleaning fan 52 of cleaning system 26. The first and second streams 81 and 83 combine as those streams impact the outer surface of drum 202. The newly combined streams pass between the lower surface of the rotating drum 202 and the top perforated surface of pan 204. Drum 202 and pan 204 work together to cause the weed seeds (and/or other chaff) to separate from the combined stream and fall through the perforations of pan 204 and into the interior region of pan 204. Conveyor 206 delivers the weed seeds to the inlet of seed mill 77. The rotor and stator of seed mill 77 work together to devitalize the weed seeds contained in the mill. The devitalized weed seeds are then transported to spreader 74 by gravity or a separate conveyor, for example. Spreader 74 distributes the devitalized weed seeds onto the ground below in the conventional manner. It should be understood that the rotational speed of the rotor of seed mill 77 may be significantly greater than rotational speed of drum 202, chopper 72 and spreader 74 to cause devitalization of weed seeds. It should be understood that the drum 202, chopper 72 and spreader 74 either are not or may not be configured to cause devitalization of weed seeds.

The crop material that does not pass through the perforations of pan 204 is directed by the rotating drum 202 toward the inlet of chopper 72. As noted above, roller 208 is configured to strip crop material off of the exterior surface of drum 202 and direct that material toward chopper 72 so that the crop material does not remain on the surface of the drum 202. The material that passes from drum 202 to chopper 72 is ultimately chopped into finer segments by chopper 72 and directed to the spreader 74. The shroud 217 positioned about chopper 72 may include one or more counter-knives 218 for additional chopping. Spreader 74 distributes that chopped material (along with the devitalized weed seeds) onto the ground below in the conventional manner. The shroud 217 may vary in length, and, according to a different example in which conveyor 210 is omitted, the shroud may not extend as far in the rearward direction such that the straw is transported directly to chopper 72 when door 216 is maintained in a retracted position (shown in broken lines).

It should be understood that the advantage of residue handling system 200, as compared with residue handling system 70, is that residue handling system 200 processes weed seeds that are contained in both streams 81 and 83 whereas residue handling system 70 processes weeds seeds that may be present in only stream 83. Further, any straw that was separated by the threshing system (40) onto the cleaning system (26) is removed from stream 83, and only the smaller chaff particles are processed by the weed seed mill (77), thereby reducing the weed seed mill processing power requirement.

In the swathing operating mode of the residue handling system 200, the first stream 81 of straw material is directed toward conveyor 210, which may be either an active or passive component, and that stream 81 passes through the open door 212, onto swath chute 214 and onto the ground. The second stream 83 of chaff passes between the lower surface of the rotating drum 202 and the top perforated surface of pan 204. Drum 202 and pan 204 work together to cause the weed seeds (and/or other chaff) to separate from the stream 83 and fall through the perforations of pan 204 and into the interior region of pan 204. Conveyor 206 delivers the weed seeds to the inlet of seed mill 77. The rotor and stator of seed mill 77 work together to devitalize the weed seeds contained in the mill. The devitalized weed seeds are then transported to spreader 74 by gravity or a separate conveyor. Any straw particles that were included in stream 83 then pass over the perforated pan 204 towards chopper 72 to be chopped or conveyed to the residue spreader 74.

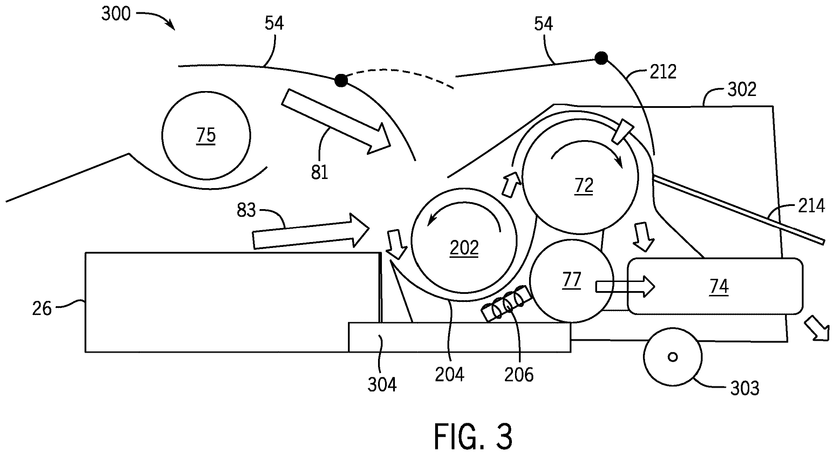

Turning now to FIG. 3, that figure depicts a schematic view of another residue handling system 300 according to a second example of the invention. The details of the above-described residue handling system 200 apply to the residue handling system 300 of FIG. 3 unless stated otherwise. The residue handling system 300 may form part of the combine of FIG. 1 replacing the residue handling system 70.

Unlike residue handling system 200, residue handling system 300 may not include conveyor 210 and roller 208. The chopper 72, spreader 74, seed mill 77, pan 204 and drum 202 are contained within a separate housing 302 having an interior region for accommodating those components. A caster 303 is mounted to housing 302 such that housing 302 can be transported along a ground surface. The housing 302 includes a connector 304 for releasable connection to the chassis 12 of the combine. The connector 304 may comprise a tongue, extendable tongue, hitch, ball hitch, tow hook, bolt, fastener, etc. or any other mechanism that is configured for releasable connection to the chassis 12 of the combine. System 300 may be removed for the purposes of replacement or servicing and/or accessing the cleaning system or other component of the combine, for example.

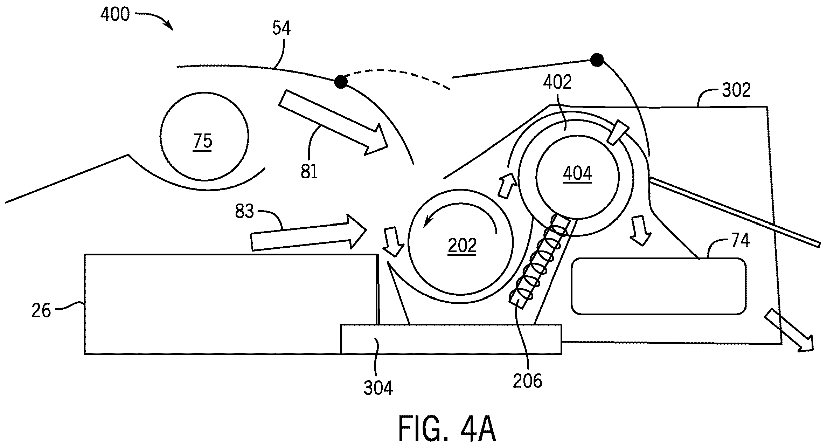

Turning now to FIG. 4A, that figure depicts a schematic view of another residue handling system 400 according to a third example of the invention. The details of the above-described residue handling system 300 applies to the residue handling system 400 of FIG. 4A unless stated otherwise. The residue handling system 400 may form part of the combine of FIG. 1 replacing the residue handling system 70.

Unlike residue handling system 300, the chopper 402 and the seed mill 404 of residue handling system 400 are positioned coaxial to one another. Turning now to FIG. 4B, the chopper 402 and one or more seed mills 404 (two shown) may be connected by a common drive shaft 406, whereby the common drive shaft 406 is connected to a source of power 409 (e.g., motor of combine) by a belt 410 or gear, for example. The inlet of each seed mill 404 receives chaff (including weed seeds) via conveyor 206, whereas the inlet 405 of chopper 402 receives a crop stream via the rotating action of drum 202, as shown in FIG. 4A. The outlet of chopper 402 feeds (i.e., distributes) chopped crop material into the inlet of a respective spreader 74. At the same time, the outlet of the seed mill 404 feeds devitalized seeds (and/or other chaff) into the inlet of a respective spreader 74. Alternatively, the outlet of the seed mill 404 may feed devitalized seeds into the chopper 402 which is ultimately distributed to the spreader 74. The system 400 may include a single spreader 74, if so desired. The spreaders 74 may be connected together by a common drive shaft 412. The drive shafts of the spreaders 74, mills 404, chopper 402 and drum 202 may be driven together by one or more belts 410. It should be understood that the arrangement of the belt 410 could vary greatly and is not limited to that which is shown.

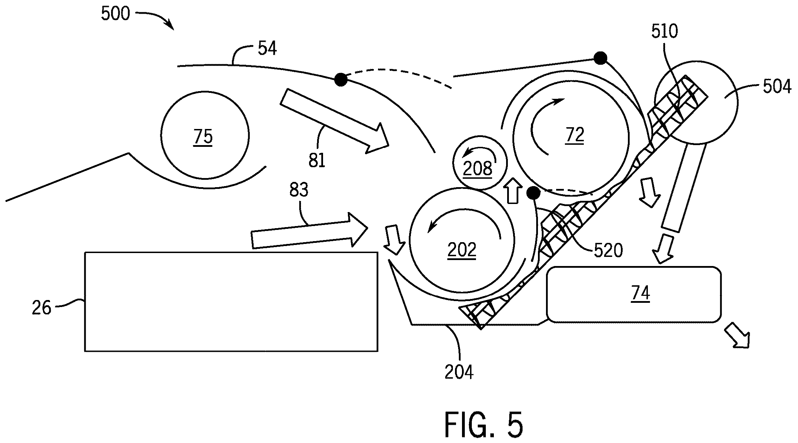

Turning now to FIG. 5, that figure depicts a schematic view of another residue handling system 500 according to a fourth example of the invention. The details of the above-described residue handling system 200 apply to the residue handling system 500 of FIG. 5 unless stated otherwise. The residue handling system 500 may form part of the combine of FIG. 1 replacing the residue handling system 70.

Unlike residue handling system 200, the seed mill 504 of residue handling system 500 is positioned at an elevation above drum 202. A moveable panel or door 520 is mounted near chopper 72. In the deployed position of door 520 (shown in solid lines), the door 520 directs crop material from drum 202 towards chopper 72. In the retracted position of door 520 (shown in broken lines), the door 520 directs crop material from drum 202 directly to spreader 74.

In regular operation when door 520 is maintained in the deployed position shown in solid lines, first and second streams 81 and 83 are directed onto drum 202. Weed seeds (and/or other chaff) are collected within the interior region of pan 204, as described above. An auger 510 transports the weed seeds from the interior region of pan 204 directly to the inlet of seed mill 504. The seed mill 504 devitalizes the weed seeds and directs the devitalized weed seeds to the spreader 74. The remaining crop matter that does not fall through the perforations in pan 204 is transported by drum 202 to chopper 72 and the chopped material is ultimately delivered to spreader 74.

In a different mode of operation when door 520 is maintained in the retracted position shown in broken lines, first and second streams 81 and 83 are directed onto drum 202. Weed seeds (and/or other chaff) are collected within the interior region of pan 204, as described above. Auger 510 transports the weed seeds from the interior region of pan 204 directly to the inlet of seed mill 504. The seed mill 504 devitalizes the weed seeds and directs the devitalized weed seeds to the spreader 74. The remaining crop matter that does not fall through the perforations in pan 204 is transported by drum 202 across the surface of door 520 and into the spreader 74, thereby bypassing the chopper 72.

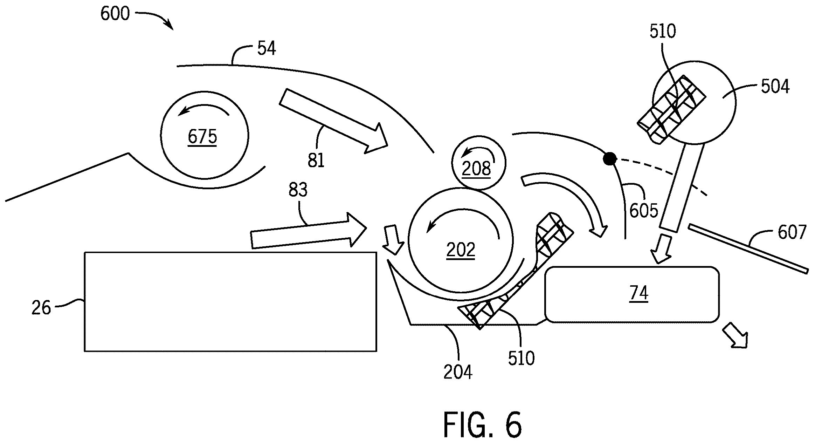

Turning now to FIG. 6, that figure depicts a schematic view of another residue handling system 600 according to a fifth example of the invention. The details of the above-described residue handling system 500 apply to the residue handling system 600 of FIG. 6 unless stated otherwise. The residue handling system 600 may form part of the combine of FIG. 1 replacing the residue handling system 70.

In residue handling system 600, the separate chopper and beater described above are replaced by a single chopper 675 that is positioned at the outlet of threshing system 40. The chopper 675 distributes the chopped first stream 81 toward the drum 202, and the cleaning system 26 distributes the second stream 83 onto the rotating drum 202. Weed seeds (and/or other chaff) are collected within the interior region of pan 204, as described above. Auger 510 transports the weed seeds from the interior region of pan 204 directly to the inlet of seed mill 504. The central portion of auger 510 is cut-away in FIG. 6 to reveal other components. The seed mill 504 devitalizes the weed seeds and directs the devitalized weed seeds to the spreader 74. The remaining (chopped) crop matter that does not fall through the perforations in pan 204 is transported by drum 202 and directed toward door 605 near the outlet of system 600.

If the door 605 is maintained in the deployed state shown in solid lines, then said remaining (chopped) crop matter that does not fall through the perforations in pan 204 is transported by drum 202 into an inlet of spreader 74, and all of the material is eventually delivered onto the ground by spreader 74. Alternatively, if the door 605 is maintained in the retracted state shown in broken lines, then said remaining (chopped) crop matter that does not fall through the perforations in pan 204 is transported by drum 202 onto the swath chute 607 and onto the ground.

## Claims

1. An agricultural vehicle (10) comprising:
a threshing system (24) that is configured to output a straw feed stream (81) containing straw material into a strawhood (54) of the vehicle;
a cleaning system (26) that is configured to output a chaff feed stream (83), which is separate from the straw feed stream (81), into the strawhood (54); and
***characterized in that*** the agricultural vehicle further comprises a residue handling system (200, 300, 400, 500) including (i) a chaff receptacle (204) positioned and configured to receive weed seeds from both the straw feed stream and the chaff feed stream, and (ii) a weed seed mill (77, 404, 504) that is configured to receive the weeds seeds from the chaff receptacle (204) and devitalize those weeds seeds.

2. The agricultural vehicle of claim 1, wherein the chaff receptacle (204) comprises a perforated surface through which the weed seeds can pass.

3. The agricultural vehicle of claim 2, wherein the residue handling system (200, 300, 400, 500) further comprises a rotatable drum (202) mounted adjacent the perforated surface for threshing the straw feed stream and the chaff feed stream against the perforated surface in order to separate the weed seeds from the straw feed stream and the chaff feed stream.

4. The agricultural vehicle of claim 3, further comprising a roller (208) mounted adjacent the rotatable drum (202) for removing crop material from an outer surface of the drum (202).

5. The agricultural vehicle of claim 3 or claim 4, wherein the residue handling system (200, 300, 400, 500) further comprises a chopper (72, 402) positioned downstream of the drum (202) for receiving crop material released from the drum and chopping that released crop material into smaller segments.

6. The agricultural vehicle of claim 5, wherein a rotor of the weed seed mill (404) and a rotor of the chopper (402) are co-axial.

7. The agricultural vehicle of claim 6, wherein the rotor of the weed seed mill (404) and the rotor of the chopper (402) are fixedly connected together.

8. The agricultural vehicle of any one of claims 5-7, wherein the residue handling system (200, 300, 400, 500) further comprises a spreader (74) that is configured to (i) receive crop streams output from the weed seed mill (77, 404, 504) and the chopper (72, 402) and (ii) output the crop streams onto the ground.

9. The agricultural vehicle of claim 8, wherein the weed seed mill (404, 504) is positioned at an elevation above the spreader (74), and wherein the residue handling system (400, 500) further comprises a conveyor (206, 510) that is configured to convey the weeds seeds from the chaff receptacle (204) and into the weed seed mill (404, 504).

10. The agricultural vehicle of any one of claims 3-9, wherein the drum (202) is positioned such that the straw feed stream (81) and the chaff feed stream (83) impact directly on an outer surface of the drum.

11. The agricultural vehicle of claim 10, wherein the agricultural vehicle further comprises a bypass door (216) that is movable between a first position and a second position, wherein, in the first position of the bypass door, the bypass door directs the straw feed stream (81) and the chaff feed stream (83) to directly impact the outer surface of the drum (202), and in the second position of the bypass door (216), the straw feed stream (81) is permitted to freely pass over the drum (202).

12. The agricultural vehicle of any one of the foregoing claims, wherein the chaff receptacle (204) comprises a housing defining an interior space in which the weed seeds can accumulate.

13. The agricultural vehicle of claim 12, wherein the residue handling system (200, 300, 400, 500) further comprises a conveyor (206, 510) that is configured to convey the weeds seeds from the interior space and into the weed seed mill (77, 404, 504).

14. The agricultural vehicle of any one of the foregoing claims, wherein the agricultural vehicle comprises a chassis (12) to which the threshing system (24) and cleaning system (26) are mounted, and wherein the residue handling system (300, 400) is disposed in a separate housing (302) that is releasably connected to the chassis by a releasable connector.

15. The agricultural vehicle of any one of the foregoing claims, wherein the agricultural vehicle (10) is a combine harvester.
